(19) Europäisches Patentamt
European Patent Office
Office européen des brevets

(11) Veröffentlichungsnummer: **0 109 508**
**A1**

(12) **EUROPÄISCHE PATENTANMELDUNG**

(21) Anmeldenummer: **83109465.1**

(22) Anmeldetag: **23.09.83**

(51) Int. Cl.³: **C 08 L 83/04**
//(C08L83/04, 83/04, C08K3/36, 5/14)

(30) Priorität: **23.11.82 DE 3243194**

(43) Veröffentlichungstag der Anmeldung:
**30.05.84 Patentblatt 84/22**

(84) Benannte Vertragsstaaten:
**BE DE FR GB**

(71) Anmelder: **Degussa Aktiengesellschaft**
**Weissfrauenstrasse 9**
**D-6000 Frankfurt am Main 1(DE)**

(72) Erfinder: **Bode, Rudolf**
**An der Heppenmauer 15**
**D-6482 Bad Orb(DE)**

(72) Erfinder: **Ferch, Horst, Dr.**
**Justus-Liebig-Strasse 13**
**D-6454 Bruchköbel(DE)**

(72) Erfinder: **Reisert, Arthur**
**Alzenauer Strasse 27a**
**D-8756 Kahl(DE)**

(54) **Verfahren zur Herstellung von Siliconkautschuk-Vulkanisaten.**

(57) Siliciumdioxid enthaltende Siliconkautschuk-Mischung wird in Gegenwart von Polymethylhydrogensiloxan beispielsweise der Formel

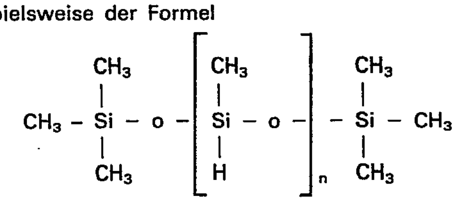

mittels Peroxide vulkanisiert.

EP 0 109 508 A1

Croydon Printing Company Ltd.

82 186 FH



Degussa Aktiengesellschaft
6000 Frankfurt am Main 1

# Verfahren zur Herstellung von Siliconkautschuk-Vulkanisaten

Es ist bekannt, Siliconkautschuk in Gegenwart von Peroxiden zu vulkanisieren (Noll, Chemie und Technologie der Silicone, Verlag Chemie 1968, S. 197 und DE-PS 11 62 560). Die bekannten Verfahren führen jedoch zu mehr oder minder vergilbten Vulkanisaten, sodaß es wünschenswert ist, ein Verfahren, welches nicht zu vergilbten Vulkanisaten führt, zu entwickeln.

Gegenstand der Erfindung ist ein Verfahren zur Herstellung von Siliconkautschuk-Vulkanisaten, welches dadurch gekennzeichnet ist, daß man Siliciumdioxid enthaltenden Siliconkautschuk mittels Peroxid in Gegenwart von Polymethylhydrogensiloxan vulkanisiert. Als Polymethylhydrogensiloxan kann eine Verbindung der Formel

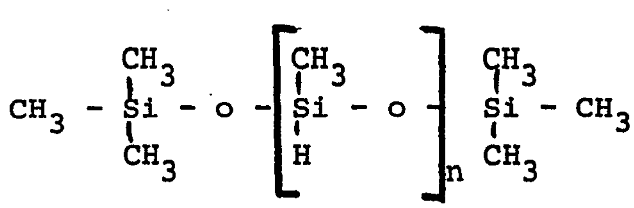

eingesetzt werden.

Die Menge des eingesetzten Polymethylhydrogensiloxans kann 0,1 bis 2 Gew.-%, vorzugsweise 0,6 Gew.-%, bezogen auf die eingesetzte Kautschukmenge, betragen.

Als Siliciumdioxid kann gefälltes und/oder auf pyrogenem Wege hergestelltes Siliciumdioxid verwendet werden. Ebenso ist es möglich, das Siliciumdioxid in hydrophobierter Form einzusetzen.

In einer vorteilhaften Ausführungsform der Erfindung kann das Polymethylhydrogensiloxan im Gemisch mit dem Siliciumdioxid der zu vulkanisierenden Mischung zugesetzt werden. Dabei kann die Menge an Polymethylenhydrogensiloxan bis zu 10 Gew.-% bezogen auf die eingesetzte Menge an Siliciumdioxid betragen.

Als Peroxide können beispielsweise eingesetzt werden:

Dicumylperoxid (95 %)
Bis-2,4-dichlorbenzoylperoxid

Es ist jedoch auch möglich, die folgenden Klassen von Peroxiden einzusetzen: Diaroylperoxyde wie Dibenzoylperoxid, Di-p-chlorbenzoylperoxid, Bis-2,4-dichlorbenzoylperoxid, Dialkylperoxide wie Di-tert.butylperoxid, Diaralkylperoxid wie Dicumylperoxide sowie Alkylarylperoxide, Alkylarayl- und Alkylacylperoxide wie tert. Butylperbenzoat oder tert. Butylperacetat und/oder Gemische von Vertretern verschiedener Klassen wie Dibenzoylperoxid und tert. Butylperbenzoat.

Als Siliconkautschuk kann vorzugsweise ein mit Trimethylsiloxylgruppen endblockiertes, vinylgruppenhaltiges Polydimethylsiloxan, wie es in der DE-OS 29 11 352, Beispiel 1 beschrieben wird, eingesetzt werden.

Das erfindungsgemäße Verfahren weist den Vorteil auf, daß das Vulkanisat keine unerwünschte Gelbfärbung aufweist.

Beispiele

Das verwendete Polymere A oder B ein mit Trimethylsiloxylgruppen endblockiertes, vinylgruppenhaltiges Polydimethylsiloxan.

Als Polymethylenhydrogen wird Baysilon®-Öl MH 15 eingesetzt. Es entspricht der angegebenen Formel, in der n = 40 ist.

Die verwendeten Kieselsäuren weisen die folgenden physikalisch-chemischen Kenndaten auf:

| | BET-Oberfläche [m²/g] | mittlere Größe der Primärteilchen [nm] | Glühverlust [%] | Kohlenstoff- [%] | pH-Wert | Herst.-Methode |
|---|---|---|---|---|---|---|
| Aerosil 380 | 380 | 7 | <2,5 | - | 3,9 | pyrogen |
| R 972/300 | 250 | 7 | <2 | 1 | 3,6 | pyrogen |
| FK 320 DS | 170 | 18 | 5 | - | 6,3 | Fällung |
| FK 160 | 160 | 18 | 3,3 | - | 4,5 | Fällung |
| VP D 15 | 110 | 18 | 5,5 | 2,5 | 7,5 | Fällung |

0-44918

Versuchsnummern 1 - 2

Auf einem Mischwalzwerk wird das vinylgruppenhaltige Polydimethylsiloxan A mit 0,6 phr (phr = parts per hundred parts of the resin = Teile/100 Teile Polymer) Dicumylperoxid vermischt. Die Vormischung wird geteilt und eine Hälfte mit 1 % Polymethylhydrogensiloxan vermischt.

Von den beiden Mischungen werden in einer beheizbaren Presse bei 180°C Platten von 6 mm Dicke bei einer Vulkanisationsdauer von 15 Minuten vulkanisiert. Anschliessend werden die Silicongummi-Platten 6 Std. bei 200°C im Umluft-Heizschrank gelagert.

An den so hergestellten Probekörpern werden dann mit Hilfe eines Farbmeßgerätes (RFC 3 von Zeiss) die Normfarbwerte X,Y,Z bestimmt. (Normlichtart D 65, 10° Normalbeobachter.). Aus diesen Meßergebnissen lassen sich nach DIN 6167 der Gelbwert und die Vergilbungszahl wie folgt errechnen:

$$= \frac{1,301\ x - 1,149\ z}{Y} \cdot 10 \text{ und } V = C_b - Cu$$

mit Index u und b für "unbehandelt" (d.h. ohne) bzw. "behandelt" (d.h. mit Polymethylhydrogensiloxan)

Versuchsnummern 3-6

Aus einem Mischwalzwerk wird das vinylgruppenhaltige Polydimethylsiloxan A mit 35 und 40 phr Kieselsäure vermischt. Die Vormischungen werden geteilt und die eine Hälfte mit 1 % Polymethylhydrogensiloxan versetzt. Anschließend werden allen Mischungen 0,6 phr Dicumylperoxid beigemischt. Probekörperherstellung und Messungen erfolgen wie in Beispiel 1 beschrieben.

Versuchsnummern 7 - 10

Vorbereitung und Durchführung der Prüfungen erfolgt wie bei den Versuchsnummern 1-2, jedoch wird anstelle von Dicumylperoxid das Bis-2,4-dichlorbenzoylperoxid eingemischt und die Vulkanisation in 8 Minuten bei 130°C durchgeführt.

Versuchsnummer 1-2, 11-14

Vorbereitung und Durchführung der Prüfungen erfolgt wie bei den Versuchsnummern 1-2. Das Polymethylhydrogensiloxan wird jedoch in verschiedenen Konzentrationen eingesetzt.

Versuchsnummern 15 - 19

Vorbereitung und Durchführung der Prüfungen erfolgt wie bei den Versuchsnummern 1 - 2 (Dicumylperoxid) bzw. 3 (Bis-2,4-dichlorbenzoylperoxid) beschrieben. Anstelle von Dimethylpolysiloxan A wird Dimethylpolysiloxan B eingesetzt.

Tabelle 1

| Versuchsnummer | | 1 | 2 | 3 | 4 | 5 | 6 | 7 | 8 | 9 | 10 |
|---|---|---|---|---|---|---|---|---|---|---|---|
| Dimethylpolysiloxan A | Teile | 100 | 100 | 100 | 100 | 100 | 100 | 100 | 100 | 100 | 100 |
| Polymethylhydrogen-siloxan | " | - | 1 | - | 1,4 | - | 1,4 | - | 1 | - | 2,8 |
| Kieselsäure VP D15 | | - | - | 35 | 35 | - | - | - | - | - | - |
| Kieselsäure FK 160 | | - | - | - | - | 40 | 40 | - | - | - | - |
| Kieselsäure FK 320 DS | | - | - | - | - | - | - | - | - | 40 | 40 |
| Dicumylperoxid | " | 0,6 | 0,6 | 0,81 | 0,81 | 0,84 | 0,84 | - | - | - | - |
| Bis-2,4-dichlorbenzoyl-peroxid | " | - | - | - | - | - | - | 0,5 | 0,5 | 0,7 | 0,7 |
| Gelbwert | | 19 | -5 | 85 | 43 | 73 | 38 | -5 | -5 | 40 | 18 |
| Vergilbungszahl | | "0" | -24 | "0" | -42 | "0" | -35 | "0" | ± 0 | "0" | -22 |
| Normfarbwert X | | 63 | 67 | 22 | 36 | 28 | 40 | 70 | 72 | 27 | 36 |
| Normfarbwert Y | | 68 | 70 | 21 | 37 | 27 | 41 | 74 | 75 | 28 | 38 |
| Normfarbwert Z | | 61 | 79 | 10 | 27 | 14 | 31 | 83 | 84 | 21 | 35 |

Tabelle 1 (Fortsetzung)

| Versuchsnummer | | 1 | 2 | 11 | 12 | 13 | 14 |
|---|---|---|---|---|---|---|---|
| Dimethylpolysiloxan A | Teile | 100 | 100 | 100 | 100 | 100 | 100 |
| Polymethylhydrogensiloxan | " | - | 1 | - | 0,4 | 0,8 | 1,2 |
| Aerosil R 972/300 | " | - | - | 40 | 40 | 40 | 40 |
| Dicumylperoxid | " | 0,6 | 0,6 | 0,85 | 0,85 | 0,85 | 0,85 |
| Gelbwert G | | 19 | -5 | 65 | 47 | 39 | 36 |
| Vergilbungszahl V | | "0" | -24 | "0" | -18 | -26 | -29 |
| Normfarbwert X | | 63 | 67 | 39 | 43 | 45 | 46 |
| Normfarbwert Y | | 68 | 70 | 41 | 45 | 47 | 48 |
| Normfarbwert Z | | 61 | 79 | 22 | 30 | 35 | 37 |

Tabelle 3

| Versuchsnummer | | 15 | 16 | 17 | 18 | 19 |
|---|---|---|---|---|---|---|
| Dimethylpolysiloxan B | Teile | 100 | 100 | 100 | 100 | 100 |
| Polymethylhydrogensiloxan | " | - | - | 1 | - | 1,4 |
| Aerosil 380 | " | - | - | - | 35 | 35 |
| Dicumylperoxid | " | - | 0,6 | 0,6 | 0,8 | 0,8 |
| Bis-2,4-dichlorbenzolyplerpxod | " | 0,5 | - | - | - | - |
| Gelbwert G | | 8 | 44 | 13 | 61 | 24 |
| Vergilbungszahl V | | - | "0" | -31 | "0" | -37 |
| Normfarbwert X | | 63 | 59 | 64 | 43 | 50 |
| Normfarbwert Y | | 67 | 63 | 68 | 45 | 52 |
| Normfarbwert Z | | 67 | 42 | 65 | 25 | 45 |

0-44918

82 186 FH

Degussa Aktiengesellschaft
6000 Frankfurt am Main 1

Verfahren zur Herstellung von Siliconkautschuk-Vulkanisaten

Patentansprüche

1. Verfahren zur Herstellung von Siliconkautschuk-Vulkanisaten, dadurch gekennzeichnet, daß man Siliciumdioxid enthaltenden Siliconkautschuk mittels Peroxid in Gegenwart von Polymethylhydrogensiloxan vulkanisiert.

2. Verfahren nach Anspruch 1, dadurch gekennzeichnet daß man das Polymethylenhydrogensiloxan im Gemisch mit dem Siliciumdioxid der zu vulkanisierenden Mischung zusetzt.

-2-

0109508

Nummer der Anmeldung

Europäisches Patentamt

## EUROPÄISCHER RECHERCHENBERICHT

EP 83 10 9465

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | PATENTS ABSTRACTS OF JAPAN, Band 2, Nr. 81, 28. Juni 1978, Seite 1135 C 78 & JP - A - 53 40 050 (TORAY SILICONE K.K.) 12.04.1978 * Zusammenfassung * --- | 1 | C 08 L 83/04 // (C 08 L 83/04 C 08 L 83/04 C 08 K 3/36 C 08 K 5/14 ) |
| X | PATENTS ABSTRACTS OF JAPAN, Band 3, Nr. 83, 18. Juli 1979, Seite 104 C 52 & JP - A - 54 60 356 (TORAY SILICONE K.K.) 15.05.1979 * Zusammenfassung * --- | 1 | |
| X | BE-A- 635 287 (BAYER) * Zusammenfassung; Seite 2, Zeilen 22-27; Seite 2, Zeilen 28-31; Seite 4, Zeilen 1-5; Seite 5, Zeilen 11-18 * --- | 1 | RECHERCHIERTE SACHGEBIETE (Int. Cl. 3) |
| X | US-A-4 335 035 (M. HATANAKA) * Anspruch 1; Spalte 1, Zeilen 33-41 * ----- | 1 | C 08 L |

Der vorliegende Recherchenbericht wurde für alle Patentansprüche erstellt.

| Recherchenort | Abschlußdatum der Recherche | Prüfer |
|---|---|---|
| DEN HAAG | 21-02-1984 | DEPIJPER R.D.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82